# EUROPÄISCHE PATENTSCHRIFT

(11) **EP 3 532 357 B1**
(45) Veröffentlichungstag und Bekanntmachung des Hinweises auf die Patenterteilung: **24.07.2024**
(21) Anmeldenummer: 17794268.7
(22) Anmeldetag: 20.10.2017
(51) Int. Cl.: B61G 7/08, B61G 7/12

(54) **VORRICHTUNG ZUR HORIZONTALEN MITTENRÜCKSTELLUNG EINES KUPPLUNGSSCHAFTS**
DEVICE FOR HORIZONTAL, CENTERING RESTORATION OF A COUPLING SHAFT
DISPOSITIF POUR LE RAPPEL CENTRAL HORIZONTAL D'UNE TIGE D'ATTELAGE

(30) Priorität: 28.10.2016 DE 102016120639
(43) Veröffentlichungstag der Anmeldung: 04.09.2019
(73) Patentinhaber: Voith Patent GmbH, 89522 Heidenheim (DE)
(72) Erfinder: SCHIPMANN, Ralf, 25554 Neuendorf-Sachsenbande (DE); JOHANNSEN, Erik, 38106 Braunschweig (DE)
(74) Vertreter: Meissner Bolte Partnerschaft mbB
(86) Internationale Anmeldenummer: PCT/EP2017/076873
(87) Internationale Veröffentlichungsnummer: WO 2018/077752

(56) Entgegenhaltungen:
- EP-A1- 1 538 057
- EP-A1- 1 719 686
- EP-A1- 2 522 560
- DE-A1- 102009 021 873
- DE-A1- 102009 021 874
- DE-U1- 20 120 581
- DE-U1- 202009 012 949
- DE-U1- 202012 100 064
- DE-U1- 29 713 253

## Beschreibung

Die Erfindung betrifft eine Mittelpufferkupplung eines spurgeführten Fahrzeuges mit einer Vorrichtung zur horizontalen Mittenrückstellung eines Kupplungsschafts der Mittelpufferkupplung.

Derartige Vorrichtungen zur Mittenrückstellung sind beispielsweise aus der DE 1 810 593 B2, der DE 24 19 184 A1, der DE 28 22 104 A1 oder der DE 24 45 460 A1 bekannt.

Im Einzelnen zeigt die DE 1 810 593 B2 eine Vorrichtung zur horizontalen Mittenrückstellung für eine mittels eines Kupplungsschafts schwenkbar an einem Schienenfahrzeug angebrachte Mittelpufferkupplung mit einer die Schwenkbewegung des Kupplungsschafts um seine vertikale Schwenkachse mitmachende Führung. Symmetrisch zur Längsachse des Kupplungsschafts sind an Führungen schräge Druckflächen angeordnet. Federnde Druckeinrichtungen, die sich am Gehäuse für den Kupplungsschaft abstützen und die horizontale Mittenrückstellung bewirken, weisen jeweils eine Rückstellfeder, ein von der Rückstellfeder beaufschlagtes und mit einer der Druckflächen zusammenwirkendes, eine Rolle tragendes Druckübertragungsglied und ein die Bewegung des Druckübertragungsgliedes begrenzendes Anschlagglied auf, wobei jeder Druckfläche eine Druckeinrichtung zugeordnet ist.

Aus der DE 24 19 184 A1 ist eine weitere Vorrichtung zur horizontalen Mittenrückstellung einer Mittelpufferkupplung für Schienenfahrzeuge bekannt, bei der symmetrisch beiderseits der Kupplungsachse je eine Druckfeder angeordnet ist, die jeweils an einem in einem Gehäuse geführtes Gleitstück anliegt. Die Gleitstücke sind jeweils über eine zugehörige Stützrolle mit vertikaler Achse durch die Kraft der vorgespannten Druckfedern gegen eine die horizontale Schwenkbewegung des Kupplungsschafts um die vertikale Schwenkachse der Mittelpufferkupplung mitmachende Führung angedrückt. Die Stützrollen bilden symmetrisch beiderseits der Kupplungsachse je ein in der Führung gelagertes Stützrollenpaar, dessen beide Stützrollen jeweils unterschiedliche Abstände von der Kupplungsachse aufweisen, wobei die Achsen der Stützrollen auf einem zur vertikalen Schwenkachse der Mittelpufferkupplung konzentrischen Kreis liegen. In der Mittenstellung der Mittelpufferkupplung liegen die Stützrollen jedes Stützrollenpaares jeweils an einer Gleitfläche des in Draufsicht etwa dreieckförmigen Gleitstückes an, wobei an jedem Gleitstück ein Führungsschaft angeordnet ist, der das Gehäuse durchdringt und in diesem geführt ist. Im normalen Betrieb, d.h. auch bei Durchfahren von Kurven oder Weichen, ist die Mittenstellvorrichtung ständig wirksam, so dass sich an den Gleitflächen der Gleitstücke, die durch die Druckfedern gegen die Stützrollen gedrückt werden, durch die Schwenkbewegung der Mittelpufferkupplung ein relativ großer Verschleiß ergibt. Ein Kuppeln in einer Kurve ist nur mit Schwierigkeiten oder gar nicht möglich, da hier die Rückstellkräfte der Druckfedern dem manuell bewirkten Ausschwenken der zu kuppelnden Mittelpufferkupplung entgegenwirken.

Durch die DE 28 22 104 A1 ist allerdings eine Einrichtung bekannt geworden, welche die Nachteile vorgenannter Vorrichtung dadurch löst, dass die Mittenrückstellung abschaltbar ausgebildet ist und, wenn eine Mittenrückstellung nicht erforderlich oder nicht erwünscht ist, ausgeschaltet wird. Dazu ist an den Führungsschäften der Gleitstücke jeweils ein doppelarmiger Schwenkhebel angelenkt, dessen einer Hebelarm direkt oder indirekt mit einem Hubzylinder verbunden ist und dessen anderer Hebelarm sich gegen das Gehäuse abstützt, wobei die Gleitstücke durch Verschwenken der Schwenkhebel mittels angesteuertem oder fernbetätigbarem Hubzylinder gegen die Kraft der Druckfedern in eine Lage bringbar sind, in der die Stützrollen bei einer horizontalen Schwenkbewegung des Kupplungsschaftes keine Berührung mit den Gleitstücken haben und der Kupplungsschaft damit unbelastet von der Druckfeder frei verschwenkbar ist.

Aus der DE 24 45 460 A1 ist eine Vorrichtung zur steuerbaren Mittenrückstellung von Mittelpufferkupplungen bekannt, wobei sich ein mit dem Kupplungsschaft wirkverbundener Nocken zwischen zwei Anschläge erstreckt, welche in der horizontalen Bahn des Nockens von pneumatisch, hydraulisch oder elektrisch wirkenden Betätigungsmitteln verschiebbar angeordnet sind, wobei in der einen Endstellung der Anschläge der volle horizontale Seitenausschlag der Kupplungsstange zur Verfügung steht, wohingegen in der anderen Endstellung die Nocken zwischen den Anschlägen eingeklemmt und der Kupplungsschaft damit in der Mittenstellung fixiert ist. Durch diese Einrichtung wird erreicht, dass der Kupplungsschaft beim Fahren fest und weitgehend schwingungsfrei in Mittellage stehen bleibt, aber andererseits diese Blockierung der Mittenlage nicht durch das Anbringen zu großer Auslenkkräfte im normalen Betrieb erkauft wird.

Aus der DE 43 28 811 C1 ist eine Mittelpufferkupplung mit horizontal verschwenkbarem, vorderem Kupplungsschaft bekannt, der den Kupplungskopf trägt, und der zusammen mit diesen bei Nichtgebrauch nach Lösen einer Feststelleinrichtung manuell hinter die Stirnseite des Schienenfahrzeuges verschwenkbar und artierbar ist.

Weiterhin ist aus der DE 195 26 504 C1 eine Mittelpufferkupplung für Schienenfahrzeuge bekannt, die einen fahrzeugseitig angelenkten und abgestützten hinteren Gelenkarm sowie eine daran über ein Knickgelenk mit vertikalem Gelenkbolzen angelenkten vorderen Gelenkarm aufweist, der den Kupplungskopf trägt. Ein mit den Gelenkarmen verbundenes Verriegelungsteil ist als drehbar gelagerter Verriegelungsbolzen ausgebildet, der getrieblich mit einem am hinteren Gelenkarm abgestützen Antrieb verbunden ist. Der Antrieb weist ein zwischen Anschlägen frei bewegliches Antriebselement zum Verschwenken des vorderen Gelenkarms auf. Somit ist der vordere Gelenkarm mit dem Kupplungskopf motorisch ein- und ausschwenkbar und zur Reduzierung des Gefährdungspotentials bei Nichtbenutzung hinter die stirnseitige Fahrzeugbegrenzung bringbar.

Die US 3,484,000 A offenbart eine Mittelpufferkupplung mit einer Vorrichtung zur horizontalen Mittenrückstellung eines Kupplungsschafts. Ähnlich zur Ausführung der bereits diskutierten DE 28 22 104 A erfolgt auch hier das Verschwenken des Kupplungsschafts über beidseitig am Kupplungsschaft angeordnete Schwenkhebel, die mittels eines pneumatischen Hubzylinders betätigt werden. Bei dieser Vorrichtung zur horizontalen Mittenrückstellung ist vorgesehen, dass der Kupplungsschaft in jede Stellung des vorgesehenen horizontalen Schwenkbereiches positionierbar ist. Bei der aus dem Stand der Technik gemäß der US 3,484,000 A bekannten Mittelpufferkupplung erfolgt das Verschwenken des Kupplungsschafts über beidseitig am Kupplungsschaft angeordnete Schwenkhebel, die mittels eines pneumatischen Hubzylinders betätigt werden.

Bei sämtlichen, zuvor diskutierten Lösungen kommen Mittenrückstellungen zum Einsatz, die einen relativ großen Bauraum benötigen, der jedoch häufig nicht in dem Bereich der Schnittstelle zwischen dem Kupplungsschaft und dem Wagenkasten bzw. Untergestell des spurgeführten Fahrzeuges zur Verfügung steht.

Die Druckschrift EP 1 719 686 A1 betrifft eine Mittelpufferkupplung für Schienenfahrzeuge mit einem vertikal schwenkbar an einem Anlenkgehäuse des Schienenfahrzeugs angebrachten und an seinem freien Ende einen Kupplungskopf tragenden Kupplungsschaft und mit einer Vorrichtung zur horizontalen Mittenrückstellung. Um zu erreichen, dass in einem Crashfall, das heißt beim Auftreten extremer, über den Kupplungsschaft übertragener Stoß-/Zugkräfte die kraftschlüssige Verbindung zwischen der Betätigungsvorrichtung der Mittenstellvorrichtung und dem Kupplungsschaft gelöst werden kann, ist eine trennbare Mittenstellungskupplung vorgesehen, die bei Überschreiten einer festgelegten kritischen Stoß-/Zugkraft die kraftschlüssige Verbindung zwischen der Betätigungsvorrichtung und einer Mittenstellungsführung löst.

Die Druckschrift DE 10 2009 021 873 A1 betrifft eine Vorspanneinheit mit einer ersten Rampenscheibe und einer zweiten stationären Rampenscheibe, die beide mehrere Rampenkonturen mit jeweils einer inneren Rampenkontur und einer äußeren Rampenkontur in einer Seite einer ringförmigen Fläche der Rampenscheiben ausgeformt haben. Zwischen der ersten und der zweiten Rampenscheibe sind mehrere erste Wälzkörper derart angeordnet, dass in der Vorspanneinheit durch Dreh-Schwenken wenigstens eine der beiden Rampenscheiben relativ zu der anderen Rampenscheibe die ersten Wälzkörper an den inneren Rampenkonturen auf- oder absteigen lässt.

Der Erfindung liegt von daher die Aufgabe zugrunde, eine Mittelpufferkupplung mit einer Vorrichtung zur horizontalen Mittenrückstellung eines Kupplungsschafts anzugeben, die aufgrund ihres kompakten Aufbaus nur einen relativ geringen Bauraum benötigt.

Nach der Erfindung wird diese Aufgabe durch den Gegenstand des unabhängigen Patentanspruches 1 gelöst, wobei vorteilhafte Weiterbildungen der Erfindung in den abhängigen Patentansprüchen angegeben sind.

Demgemäß betrifft die vorliegende Erfindung eine Mittelpufferkupplung eines spurgeführten Fahrzeugs, insbesondere Schienenfahrzeugs, mit einem Kupplungsschaft und einer Vorrichtung zur horizontalen Mittenrückstellung des Kupplungsschafts der Mittelpufferkupplung.

Dabei ist vorgesehen, dass die Vorrichtung zur horizontalen Mittenrückstellung einen ersten Drehkörper und einen relativ zu dem ersten Drehkörper drehbaren zweiten Drehkörper aufweist, wobei die Vorrichtung ausgebildet ist, die zur Generierung eines an dem Kupplungsschaft angreifenden Rückstellmoments benötigte Kraft durch Verdrehen der beiden Drehkörper relativ zueinander zu erzeugen. Auf diese Weise wird ein Aufbau vermieden, bei dem - wie im Stand der Technik üblich - die zur Generierung des Rückstellmoments nötige Kraft in der Ebene erzeugt wird, in der sie direkt ein Moment bewirken kann. Dies hat wiederum zur Folge, dass mit der erfindungsgemäßen Lösung Bauraum, Komponenten und Gewicht eingespart werden können.

Die Erfindung sieht vor, daß dass der erste und zweite Drehkörper Komponenten einer Axiallagereinrichtung sind, wobei dann die Axiallagereinrichtung ausgebildet ist, zumindest bedarfsweise ein auf den Kupplungsschaft wirkendes Drehmoment zu generieren. Ferner ist es denkbar, wenn die Axiallagereinrichtung ausgebildet ist, den Kupplungsschaft relativ zu einer Tragstruktur horizontal verschwenkbar zu lagern.

Auf diese Weise ist es möglich, sämtliche zur horizontalen Mittenrückstellung des Kupplungsschafts benötigten Komponenten in einem Axiallager zu integrieren, über das der Kupplungsschaft horizontal verschwenkbar relativ zu dem Wagenkasten des spurgeführten Fahrzeuges gelagert ist. Dies ermöglicht einen besonders kompakten Aufbau der Mittenrückstellvorrichtung mit nur einem relativ geringen zusätzlichen Bauraum.

Gemäß einer Ausführungsform der erfindungsgemäßen Lösung ist vorgesehen, dass die Axiallagereinrichtung bzw. die Vorrichtung zur horizontalen Mittenrückstellung ausgebildet ist, zumindest dann ein auf den Kupplungsschaft wirkendes Drehmoment zu generieren, wenn der Kupplungsschaft bezüglich einer festgelegten oder festlegbaren Mittenstellung horizontal ausgelenkt ist. Hierbei ist es von Vorteil, wenn bis zu einem vorab festlegbaren seitlichen Ausschlagwinkel von beispielsweise 15° bis 20° bezüglich der Mittenstellung des Kupplungsschaftes ein entsprechender Rückstellmoment generiert wird, wobei bei größeren Ausschlägen kein Rückstellmoment (mehr) erzeugt wird.

In einer bevorzugten Realisierung der Vorrichtung zur horizontalen Mittenrückstellung ist vorgesehen, dass der erste und zweite Drehkörper jeweils zumindest bereichsweise kreiszylinderförmig ausgebildet und derart koaxial zueinander angeordnet sind, dass der zweite Drehkörper zumindest bereichsweise von dem ersten Drehkörper aufgenommen wird. Darüber hinaus weist die Vorrichtung gemäß dieser Realisierung ein Laufrollensystem mit mindestens zwei Laufrollen und vorzugsweise genau drei Laufrollen auf. Die Laufrollen des Laufrollensystems sind über den zweiten Drehkörper drehbar gelagert und stehen derart in radialer Richtung von dem zweiten Drehkörper ab, dass diese auf einer Stirnfläche des ersten Drehkörpers aufliegen, wobei die Drehkörper über die Laufrollen des Laufrollensystems zueinander um eine vertikale Achse verdrehbar sind.

Bei dieser bevorzugten Realisierung dient die Stirnfläche des ersten Drehkörpers als Laufbahn für die Laufrollen des Laufrollensystems. Dabei wirken die Laufbahn und die Laufrollen des Laufrollensystems zumindest teilweise derart zusammen, dass bei einer Drehung des ersten Drehkörpers relativ zu dem zweiten Drehkörper der zweite Drehkörper relativ zu dem ersten Drehkörper entlang der Vertikalachse bewegt wird. Insbesondere ist in diesem Zusammenhang vorgesehen, dass die Laufbahn und die Laufrollen zumindest teilweise derart zusammenwirken, dass sich der zweite Drehkörper relativ zu dem ersten Drehkörper entlang der Vertikalachse zumindest teilweise aus dem ersten Drehkörper herausbewegt, wenn ausgehend von einem Grundzustand der Vorrichtung, in welchem die Drehkörper nicht zueinander verdreht sind, die Drehkörper zumindest um einen vorab festgelegten oder festlegbaren Winkelbetrag zueinander verdreht werden.

Hierzu ist es insbesondere denkbar, wenn die Laufbahn, d.h. die Stirnfläche des ersten Drehkörpers, auf welcher die Laufrollen des Laufrollensystems aufliegen, erste Bereiche mit zumindest bereichsweise einer ersten Laufbahntiefe und weitere, zweite Bereiche mit zumindest bereichsweise einer zweiten Laufbahntiefe aufweist, wobei die erste Laufbahntiefe größer als die zweite Laufbahntiefe ist, und wobei in einem Übergangsbereich zwischen einem ersten Bereich und einem zweiten Bereich die Laufbahntiefe der Laufbahn vorzugsweise stetig von der ersten Laufbahntiefe auf die zweite Laufbahntiefe übergeht. Vorzugsweise sind dabei in dem Grundzustand der Vorrichtung die Laufrollen des Laufrollensystems zumindest bereichsweise jeweils in einem ersten Bereich der Laufbahn angeordnet.

In einer weiteren Realisierung der Vorrichtung zur horizontalen Mittenrückstellung ist vorgesehen, dass der erste Drehkörper vorzugsweise als erstes Lagerteil, insbesondere in Gestalt einer Lagerscheibe, und der zweite Drehkörper vorzugsweise als zweites Lagerteil, insbesondere in Gestalt einer Lagerscheibe, ausgebildet ist, und dass die Vorrichtung zur horizontalen Mittenrückstellung ferner eine Wälzkörperanordnung mit mindestens einem Wälzkörper und vorzugsweise einer Vielzahl von Wälzkörpern aufweist, welcher bzw. welche zumindest bereichsweise zwischen dem ersten Drehkörper und dem zweiten Drehkörper derart angeordnet ist, dass über den mindestens einen Wälzkörper die Drehkörper zueinander um eine Vertikalachse verdrehbar sind.

Wenn beispielsweise die Vorrichtung zur horizontalen Mittenrückstellung in einer Axiallagereinrichtung ausgebildet ist, ist es somit denkbar, dass die Axiallagereinrichtung ein erstes Lagerteil sowie ein vertikal von dem ersten Lagerteil beabstandetes zweites Lagerteil aufweist, wobei diese Lagerteile jeweils insbesondere in Gestalt einer Lagerscheibe ausgeführt sind. Ferner ist vorzugsweise eine Wälzkörperanordnung mit mindestens einem Wälzkörper und vorzugsweise einer Vielzahl von Wälzkörpern vorgesehen, wobei der mindestens eine Wälzkörper bzw. die Vielzahl von Wälzkörpern zumindest bereichsweise zwischen dem ersten Lagerteil und dem zweiten Lagerteil derart angeordnet ist, dass über den mindestens einen Wälzkörper die beiden Lagerteile zueinander um eine Vertikalachse verdrehbar sind.

Vorzugsweise ist in dem ersten Drehkörper und/oder in dem zweiten Drehkörper eine Laufbahn, insbesondere in Gestalt einer Nut, vorgesehen, um zumindest bereichsweise den mindestens einen Wälzkörper bei einer Drehung des ersten Drehkörpers um die Vertikalachse relativ zu dem zweiten Drehkörper zu führen.

Gemäß einer bevorzugten Realisierung der erfindungsgemäßen Lösung wirken die Laufbahn(en) und der mindestens eine Wälzkörper zumindest teilweise derart zusammen, dass bei einer Drehung des ersten Drehkörpers relativ zu dem zweiten Drehkörper ein vertikaler Abstand zwischen den Drehkörpern variiert. So ist es insbesondere von Vorteil, wenn die Laufbahn(en) und der mindestens eine Wälzkörper zumindest teilweise derart zusammenwirken, dass ein vertikaler Abstand zwischen den Drehkörpern zunimmt, wenn ausgehend von einem Grundzustand der Axiallagereinrichtung, in welchem die Drehkörper nicht zueinander verdreht sind, die Drehkörper zumindest um einen vorab festgelegten oder festlegbaren Winkelbetrag von beispielsweise 15° bis 20° verdreht werden.

Gemäß einer Realisierung des zuletzt genannten Aspekts ist vorgesehen, dass die Laufbahn(en) mindestens einen ersten Bereich mit einer ersten Laufbahntiefe und mindestens einen weiteren, zweiten Bereich mit einer zweiten Laufbahntiefe aufweist/aufweisen, wobei die erste Laufbahntiefe größer als die zweite Laufbahntiefe ist, und wobei in einem Übergangsbereich zwischen dem mindestens einen ersten Bereich und dem mindestens einen zweiten Bereich die Laufbahntiefe vorzugsweise stetig und beispielsweise stetig und kontinuierlich mit der gleichen Steigung von der ersten Laufbahntiefe auf die zweite Laufbahntiefe übergeht. Bei dieser Realisierung der erfindungsgemäßen Lösung ist es von Vorteil, wenn in dem Grundzustand der Vorrichtung zur horizontalen Mittenrückstellung der mindestens eine Wälzkörper zumindest bereichsweise in dem mindestens einen ersten Bereich der Laufbahn(en) angeordnet ist.

Gemäß einem weiteren Aspekt der vorliegenden Erfindung ist vorgesehen, dass der Kupplungsschaft zumindest im Wesentlichen drehfest mit dem ersten Drehkörper verbunden ist, wobei der erste Drehkörper bezüglich der Tragstruktur zwar um eine Vertikalachse drehbar, jedoch nicht oder zumindest im Wesentlichen nicht bezüglich der Tragstruktur in vertikaler Richtung bewegbar gelagert ist.

In gleicher Weise sollte vorzugsweise der zweite Drehkörper bezüglich der Tragstruktur zwar in vertikaler Richtung bewegbar sein, jedoch nicht oder zumindest im Wesentlichen nicht bezüglich der Tragstruktur in horizontaler Richtung drehbar gelagert sein.

Gemäß einem weiteren Aspekt der vorliegenden Erfindung ist die Vorrichtung zur horizontalen Mittenrückstellung mit einer druckbeaufschlagten oder druckbeaufschlagbaren Stempelanordnung versehen, welche insbesondere dem zweiten Drehkörper zugeordnet ist und sich gegenüber der Tragstruktur abstützt, wobei über diese druckbeaufschlagte oder druckbeaufschlagbare Stempelanordnung eine in Richtung insbesondere des ersten Drehkörpers wirkende Normalkraft in insbesondere den zweiten Drehkörper einleitbar ist. Die Stempelanordnung ist vorzugsweise derart ausgebildet, dass ein Betrag der über die Stempelanordnung in das vorzugsweise zweite Lagerteil eingeleiteten oder einleitbaren Normalkraft einstellbar ist, und zwar derart, dass der Betrag der über die Stempelanordnung in das insbesondere zweite Lagerteil eingeleiteten Normalkraft insbesondere auch den Wert Null annehmen kann.

Gemäß einem weiteren Aspekt der Erfindung weist die Wälzkörperanordnung mindestens zwei Wälzkörper und eine den mindestens zwei Wälzkörpern zugeordnete Käfigstruktur auf zum Zwangsführen der mindestens zwei Wälzkörper.

Vorzugsweise ist ferner eine Führungsstruktur vorgesehen zum Führen und/ oder Begrenzen einer Bewegung der Käfigstruktur relativ zu dem ersten und zweiten Drehkörper. Denkbar in diesem Zusammenhang ist, dass die Führungsstruktur mindestens einen Führungskörper aufweist, welcher bezüglich der Vertikalachse exzentrisch angeordnet ist und die Drehkörper miteinander verbindet. Vorzugsweise ist dabei der Führungskörper relativ zu dem ersten Drehkörper und/ oder relativ zu dem zweiten Drehkörper rotatorisch bewegbar gelagert.

Nachfolgend wir die Erfindung unter Bezugnahme auf die beiliegenden Zeichnungen näher beschrieben.

In den Zeichnungen zeigen:
- FIG. 1A: schematisch eine Seitenansicht einer herkömmlichen Vorrichtung zur Mittenrückstellung in teilgeschnittener Darstellung;
- FIG. 1B: schematisch eine Draufsicht auf die herkömmliche Vorrichtung zur Mittenrückstellung gemäß FIG. 1A;
- FIG. 2: schematisch eine Schnittansicht einer ersten exemplarischen Ausführungsform der erfindungsgemäßen Vorrichtung zur horizontalen Mittenrückstellung mit einer Axiallagereinrichtung, welche sich in ihrem Grundzustand befindet;
- FIG. 3: schematisch und in einer isometrischen Ansicht ein Lagerteil der Ausführungsform gemäß FIG. 2 mit entsprechenden Wälzkörpern;
- FIG. 4: schematisch und in einer isometrischen Ansicht das Lagerteil gemäß FIG. 3 in einem Zustand, in welchem das erste Lagerteil relativ zu einem zweiten Lagerteil der Axiallagereinrichtung um eine Vertikalachse verdreht ist;
- FIG. 5: schematisch und in einer geschnittenen Ansicht eine weitere exemplarische Ausführungsform der erfindungsgemäßen Vorrichtung zur horizontalen Mittenrückstellung eines bezüglich der Mittenrückstellung nicht ausgelenkten Kupplungsschafts;
- FIG. 6: schematisch und in einer geschnittenen Ansicht die exemplarische Ausführungsform gemäß FIG. 5 in einem Zustand, in welchem ein der Vorrichtung zugeordneter Kupplungsschaft bezüglich seiner Mittenstellung in horizontaler Richtung ausgelenkt ist;
- FIG. 7: schematisch und in einer geschnittenen Ansicht eine weitere exemplarische Ausführungsform der erfindungsgemäßen Vorrichtung zur horizontalen Mittenrückstellung eines Kupplungsschafts, wobei ein der Vorrichtung zugeordneter Kupplungsschaft nicht bezüglich seiner Mittenstellung in horizontaler Richtung ausgelenkt ist;
- FIG. 8: schematisch und in einer isometrischen Ansicht eine Explosionsdarstellung der erfindungsgemäßen Vorrichtung zur horizontalen Mittenrückstellung gemäß der in FIG. 7 gezeigten exemplarischen Ausführungsform;
- FIG. 9: schematisch und in einer isometrischen Ansicht eine Explosionsdarstellung einer weiteren exemplarischen Ausführungsform der erfindungsgemäßen Vorrichtung zur horizontalen Mittenrückstellung; und
- FIG. 10: schematisch und in einer Seitenansicht die exemplarische Ausführungsform der erfindungsgemäßen Vorrichtung gemäß FIG. 9.

Bevor die erfindungsgemäße Lösung unter Bezugnahme auf die in den Zeichnungen dargestellten exemplarischen Ausführungsformen im Einzelnen beschrieben wird, sollen zunächst der Aufbau und die Funktionsweise einer herkömmlichen und aus dem Stand der Technik bekannten Vorrichtungen zur horizontalen Mittenrückstellung eines Kupplungsschaftes beschrieben werden.

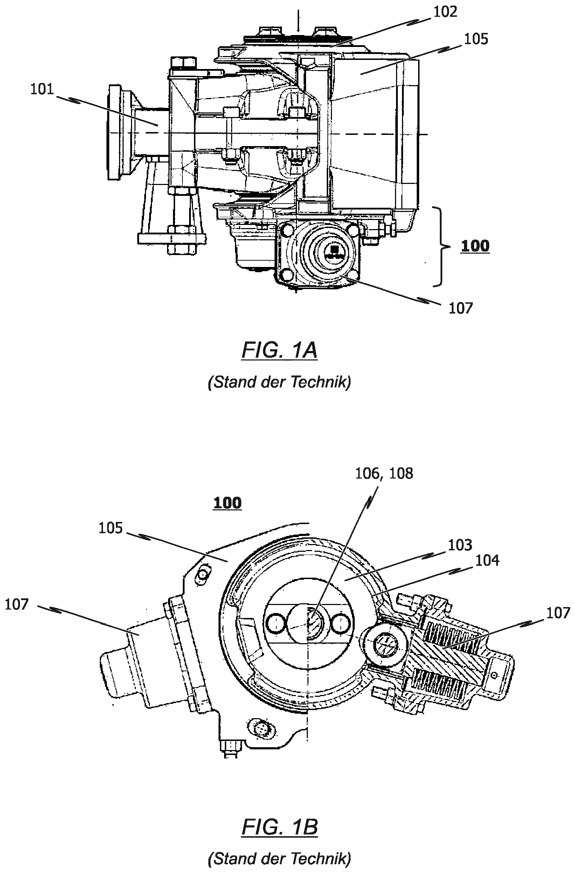

Hierzu ist in den FIG. 1A und 1B schematisch eine exemplarische Ausführungsform einer solchen herkömmlichen, aus dem Stand der Technik bekannten Vorrichtung 100 zur horizontalen Mittenrückstellung gezeigt.

Die herkömmliche Vorrichtung 100 zur Mittenrückstellung einer mittels eines Kupplungsschafts 101 schwenkbar an einem Lagerbock oder dergleichen Anbindung 102 eines spurgeführten Fahrzeuges befestigte Mittelpufferkupplung weist eine die Schwenkbewegung des Kupplungsschafts 101 um seine vertikale Schwenkachse mitmachende Führung 103 auf, die symmetrisch zur Längsachse des Kupplungsschafts 101 angeordnete Druckflächen 104 aufweist.

Der Kupplungsschaft 101 ist mittels vertikal ausgerichtetem Lagerbolzen 106 in einem Anlenkgehäuse 105 angelenkt und über dieses mit dem spurgeführten Fahrzeug verbunden. Im Anlenkgehäuse 105 sind Druckeinrichtungen 107 angeordnet, die im Zusammenwirken mit den Druckflächen 104 die horizontale Mittenrückstellung bewirken. Dabei ist jede Druckfläche 104 einer Druckeinrichtung 107 zugeordnet.

In dem Ausführungsbeispiel gemäß den FIG. 1A und 1B ist die Führung 103 als Kurvenscheibe ausgebildet, die mittels vertikal angeordnetem Bolzen 108 drehbar im Anlenkgehäuse 105 gelagert ist.

Die Kurvenscheiben (Führung 103) ist mit dem Kupplungsschaft 101 drehsynchron gekoppelt, und der Bolzen 108 ist axial fluchtend zum Lagerbolzen 106 des Kupplungsschafts 102 angeordnet. Der Bolzen 108 ist mit dem Lagerbolzen 106 wirkverbunden, und die Kurvenscheibe 103 ist fest mit einem unterhalb der Kurvenscheibe (Führung 103) angeordneten Zahnrad (in den FIG. 1A und 1B nicht dargestellt) verbunden, welches über ein Getriebe mit einem Stellantrieb, insbesondere mittels eines Elektromotors verbunden und antreibbar ist.

Die Vorrichtung zur horizontalen Mittenrückstellung gemäß den Darstellungen in FIG. 1A und FIG. 1B ist permanent wirkend oder schwenkwinkelabhängig abschaltend bzw. abschaltbar ausgebildet oder durch ein pneumatisch, hydraulisch oder elektrisch betriebenes Betätigungsmittel betätigbar. Das Betätigungsmittel ist in dem in den FIG. 1A und 1B gezeigten Ausführungsbeispiel als fernbedienbarer Stellantrieb ausgebildet, wobei mit dessen Hilfe die Kurvenscheibe (Führung 103) und der mit dieser wirkverbundene, gekoppelte Kupplungsschaft 101 über die Vorrichtung 100 zur Mittenrückstellung in jede Stellung des vorgesehenen horizontalen Schwenkbereiches des Kupplungsschafts 101 im Kraftfluss positionierbar ist.

Aufgrund des Aufbaus der aus dem Stand der Technik bekannten Vorrichtung 100 zur horizontalen Mittenrückstellung, insbesondere mit den Druckeinrichtungen 107, ist die Vorrichtung 100 relativ aufwendig und nimmt insbesondere eine relativ hohen Bauraum in Anspruch.

Mit der Erfindung, die nachfolgend anhand von exemplarischen Ausführungsbeispielen näher beschrieben wird, ist eine deutlich kompaktere Lösung realisierbar.

Im Einzelnen ist gemäß einem Aspekt der vorliegenden Erfindung insbesondere vorgesehen, dass die Vorrichtung 1 zur horizontalen Mittenrückstellung einen ersten Drehkörper 3 und einen von dem ersten Drehkörper 3 beabstandeten und relativ zu dem ersten Drehkörper 3 drehbaren zweiten Drehkörper 4 aufweist, wobei die Vor-richtung 1 ausgebildet ist, die zur Generierung eines an dem Kupplungsschaft angreifenden Rückstellmoments benötigte Kraft durch Verdrehen der beiden Drehkörper 3, 4 relativ zueinander zu erzeugen.

Gemäß einem weiteren Aspekt der vorliegenden Erfindung ist vorgesehen, dass die Vorrichtung 1 zur horizontalen Mittenrückstellung einen ersten Drehkörper 3 und einen relativ zu dem ersten Drehkörper 3 drehbaren zweiten Drehkörper 4 aufweist, wobei die Vorrichtung 1 ausgebildet ist, die zur Generierung eines an dem Kupplungsschaftes angreifenden Rückstellmoments benötigte Kraft durch Verdrehen der beiden Drehkörper 3, 4 relativ zueinander zu erzeugen. Bei diesem weiteren Aspekt der vorliegenden Erfindung ist insbesondere vorgesehen, dass der erste und zweite Drehkörper 3, 4 jeweils zumindest bereichsweise kreiszylinderförmig ausgebildet und derart koaxial zueinander angeordnet sind, dass der erste Drehkörper 3 zumindest bereichsweise von dem zweiten Drehkörper 4 aufgenommen wird.

Denkbar ist es somit, die Vorrichtung 1 zum Generieren eines Rückstellmoments innerhalb eines Axiallagers zu integrieren, über welches der Kupplungsschaft relativ zu einer Tragstruktur 11 horizontal verschwenkbar gelagert ist.

Grundsätzlich kann mit der erfindungsgemäßen Lösung der zur Realisierung der Mittenrückstellfunktion notwendige Bauraum - im Vergleich zu aus dem Stand der Technik bekannten, herkömmlichen Lösungen - deutlich reduziert werden. Der kompaktere Aufbau gestattet darüber hinaus auch eine deutliche Gewichtseinsparung sowie eine Einsparung von Komponenten, was wiederum die Wartungsanfälligkeit der Mittenrückstellvorrichtung minimiert.

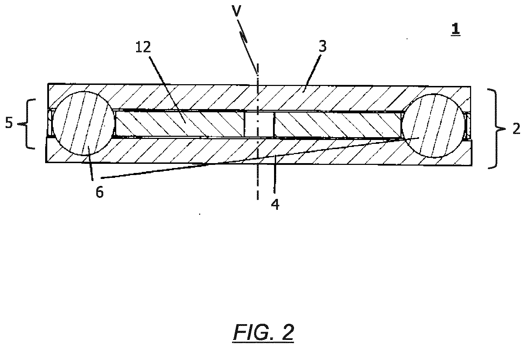

Wie es nachfolgend unter Bezugnahme auf die Darstellungen in FIG. 2 bis FIG. 10 näher beschrieben wird, liegt dabei der Erfindung die Erkenntnis zugrunde, dass ein deutlich kompakterer Aufbau einer Vorrichtung zur horizontalen Mittenrückstellung realisierbar ist, wenn die zur Generierung des für die Mittenrückstellung des Kupplungsschafts erforderlichen Rückstellmoments nötige Kraft nicht in der Ebene erzeugt wird, in der sie direkt einen Moment bewirken kann, sondern eine entsprechende Kraftquelle günstiger, und insbesondere innerhalb des Axiallagers, anzuordnen und die Kraft dementsprechend umzuleiten.

Gemäß einigen nachfolgend im Einzelnen beschriebenen, exemplarischen Ausführungsformen der erfindungsgemäßen Vorrichtung zur horizontalen Mittenrückstellung ist dazu vorgesehen, dass die Drehkörper 3, 4 als "Kurvenscheiben" mit entsprechenden Kuppen und Wannen versehen sind, so dass die Wälzkörper einer Wälzkörperanordnung die Steigungen und Gefälle der als Kurvenscheiben ausgeführten Drehkörper 3, 4 zum Ausführen einer Drehbewegung bzw. zum Generieren eines für die Mittenrückstellung erforderlichen Drehmoments nutzen können.

Bei der beispielsweise in FIG. 2 schematisch dargestellten exemplarischen Ausführungsform der erfindungsgemäßen Vorrichtung 1 zur horizontalen Mittenrückstellung eines nicht gezeigten Kupplungsschafts weist die Vorrichtung 1 einen ersten (hier: oberen) Drehkörper 3 sowie einen vertikal von dem ersten Drehkörper 3 beabstandeten, zweiten (hier: unteren) Drehkörper 4 auf. Die beiden Drehkörper 3, 4 sind bei der exemplarischen Ausführungsform gemäß FIG. 2 insbesondere jeweils als Lagerscheiben ausgeführt.

Darüber hinaus ist eine Wälzkörperanordnung 5 mit mindestens einem Wälzkörper 6 und vorzugsweise einer Vielzahl von Wälzkörpern 6 vorgesehen.

Bei den in den Zeichnungen dargestellten exemplarischen Ausführungsformen der erfindungsgemäßen Vorrichtung 1 zur horizontalen Mittenrückstellung sind die einzelnen Wälzkörper 6 jeweils zumindest im Wesentlichen kugelförmig ausgeführt. Denkbar wären aber auch Wälzkörper 6, die beispielsweise eine zylindrische oder kegelstumpfförmige Formgebung aufweisen. Auch sind grundsätzlich Wälzkörper 6 denkbar, welche eine unsymmetrische Formgebung haben.

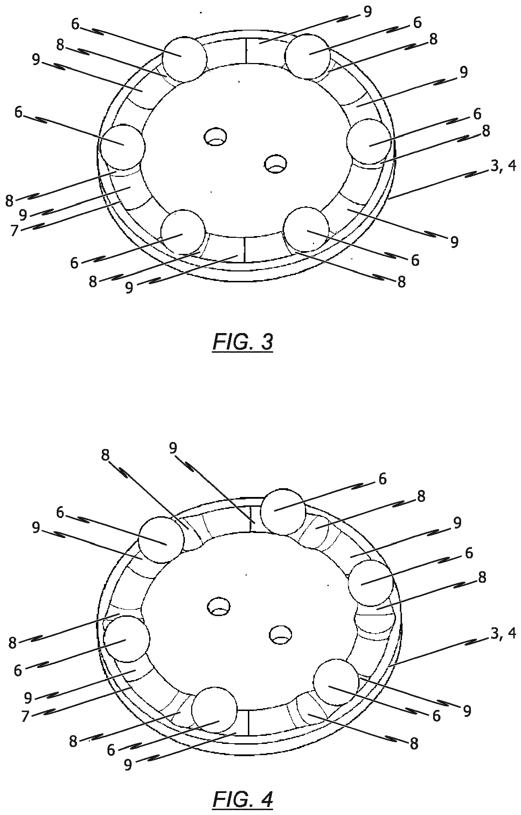

In FIG. 3 ist schematisch und in einer isometrischen Ansicht der bei der in FIG. 2 gezeigten Vorrichtung 1 zum Einsatz kommende untere Drehkörper 4 mit den Wälzkörpern 6 gezeigt, und zwar in einem Zustand, in welchem sich die Vorrichtung 1 in ihrem Grundzustand befindet. Bei diesem Grundzustand handelt es sich um einen Zustand der Vorrichtung 1, in welchem die Wälzkörperanordnung 5 bzw. die zu der Wälzkörperanordnung 5 gehörenden Drehkörper 3, 4 (Lagerscheiben) nicht relativ zueinander um eine Vertikalachse V der Axiallagereinrichtung 2 verdreht sind.

Wenn die Mittenrückstellvorrichtung 1 in einem Axiallager 2 integriert ist, über welche der Kupplungsschaft in horizontaler Ebene verschwenkbar an dem Wagenkasten eines spurgeführten Fahrzeuges gelagert ist, würde dieser Grundzustand der Mittenstellung des über die Axiallagereinrichtung 2 verschwenkbar gelagerten Kupplungsschafts entsprechen.

Im Unterschied hierzu ist in FIG. 4 schematisch eine Situation gezeigt, in welcher die Vorrichtung 1 gemäß FIG. 2 verdreht ist, d.h. nicht mehr in ihrem Grundzustand gemäß FIG. 3 vorliegt. Im Einzelnen ist in FIG. 4 schematisch und in einer isometrischen Darstellung der untere Drehkörper 4 (Lagerscheibe) der Vorrichtung 1 gemäß FIG. 2 gezeigt, und zwar in einem Zustand, in welchem der zweite Drehkörper 4 relativ zu dem ersten (oberen) Drehkörper 3, welcher in FIG. 4 nicht dargestellt ist, um die bereits genannte Vertikalachse V verdreht ist.

Wie es den Darstellungen in FIG. 3 und FIG. 4 entnommen werden kann, ist bei dieser exemplarischen Ausführungsform vorgesehen, dass zumindest der untere Drehkörper 4 eine Laufbahn 7 aufweist, die insbesondere als Nut ausgebildet sein kann. Die Laufbahn 7 dient zum zumindest bereichsweisen Führen der Wälzkörper 6 bei einer Drehung des ersten Drehkörpers 3 um die genannte Vertikalachse V relativ zu dem zweiten Drehkörper 4.

Erfindungsgemäß ist vorgesehen, dass die Laufbahn 7 des ersten und/oder zweiten Drehkörpers 3, 4 und die Wälzkörper 6 zumindest teilweise derart zusammenwirken, dass bei einer Drehung des ersten Drehkörpers 3 relativ zu dem zweiten Drehkörper 4 ein vertikaler Abstand zwischen den Drehkörpern 3, 4 variiert. Insbesondere wirken bei der in FIG. 2 schematisch dargestellten exemplarischen Ausführungsform die Laufbahn(en) 7 in dem ersten und/oder zweiten Drehkörper 3, 4 und die Wälzkörper 6 zumindest teilweise derart zusammen, dass zumindest dann ein vertikaler Abstand zwischen den Drehkörpern 3, 4 zunimmt, wenn ausgehend von einem Grundzustand der Vorrichtung 1 (vgl. FIG. 2 und FIG. 3), d.h. in einem Zustand, in welchem die Drehkörper 3, 4 nicht zueinander verdreht sind, die Drehkörper 3, 4 zumindest um einen vorab festgelegten oder festlegbaren Winkelbetrag zueinander verdreht werden.

Wie es einer Zusammenschau der FIG. 3 und der FIG. 4 entnommen werden kann, weist bei dieser exemplarischen Ausführungsform zumindest die in dem unteren Lagerteil 4 ausgebildete Laufbahn 7 erste Bereiche 8 mit einer ersten Laufbahntiefe und weitere, zweite Bereiche 9 mit einer zweiten Laufbahntiefe auf, wobei die ersten Laufbahntiefe größer als die zweite Laufbahntiefe ist, und wobei in einem Übergangsbereich zwischen dem ersten Bereich 8 und dem zweiten Bereich 9 die Laufbahntiefe vorzugsweise stetig von der ersten Laufbahntiefe auf die zweite Laufbahntiefe übergeht. In dem Grundzustand der Axiallagereinrichtung 2 ist - wie es insbesondere der isometrischen Darstellung in FIG. 3 entnommen werden kann - vorgesehen, dass die Wälzkörper 6 zumindest bereichsweise in den jeweiligen ersten Bereichen 8 der Laufbahn 7 angeordnet sind.

Wenn dann die Vorrichtung 1 ihren Grundzustand verlässt, d.h. wenn der zweite Drehkörper 4 relativ zu dem ersten Drehkörper 3 um die Vertikalachse V verdreht wird, werden die Wälzkörper 6 gezwungen, den ersten Bereich 8 der Laufbahn 7 in Richtung eines angrenzenden zweiten Bereiches 9 der Laufbahn 7 zu verlassen, was zwangsläufig dazu führt, dass der vertikale Abstand zwischen dem ersten und dem zweiten Drehkörper 3, 4 zunimmt.

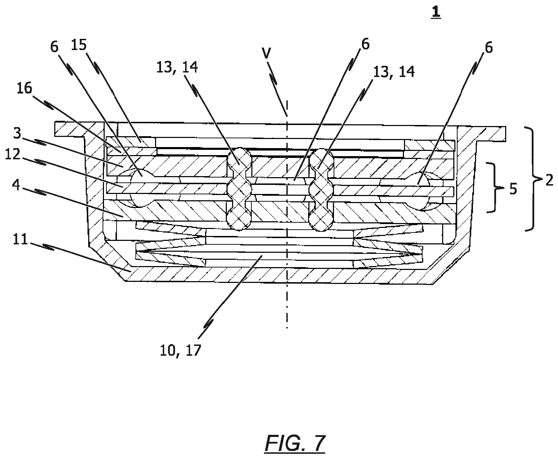

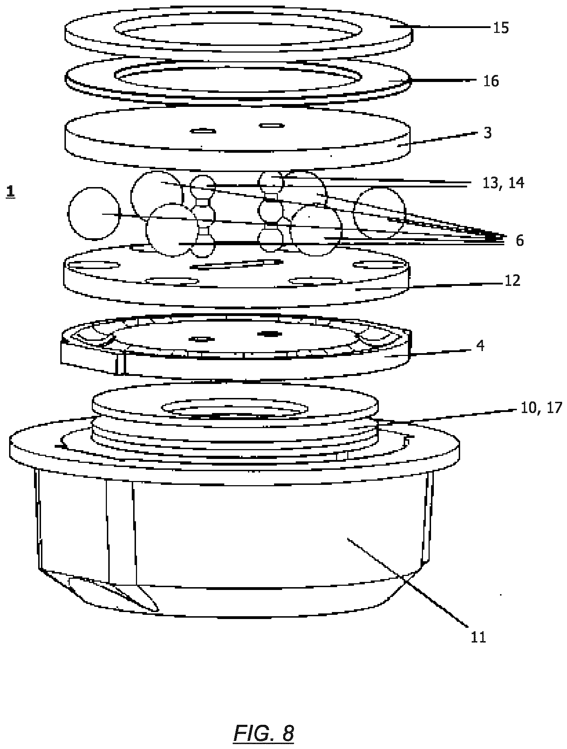

Um eine Auf- und Abwärtsbewegung eines mit dem ersten Drehkörper 3 drehfest verbundenen Kupplungsschaftes zu verhindern, ist - wie es anschließend unter Bezugnahmen auf die Darstellungen in FIG. 7 und FIG. 8 näher ausgeführt wird - eine dem zweiten Drehkörper 4 zugeordnete, druckbeaufschlagte oder durckbeaufschlagbare Stempelanordnung 10 zugeordnet, welche sich gegenüber einer Tragstruktur 11 abstützt, und über welche eine in Richtung des ersten Drehkörpers 3 wirkende Normalkraft in den zweiten Drehkörper 4 eingeleitet wird. Dabei ist vorgesehen, dass der Kupplungsschaft zumindest im Wesentlichen drehfest mit dem ersten Drehkörper 3 verbunden ist, wobei der erste Drehkörper 3 bezüglich der Tragstruktur 11 zwar um die Vertikalachse V drehbar, jedoch nicht oder zumindest im Wesentlichen nicht bezüglich der Tragstruktur 11 in vertikaler Richtung bewegbar gelagert ist.

Andererseits ist der zweite Drehkörper 4 bezüglich der Tragstruktur 11 zwar in vertikaler Richtung bewegbar, jedoch nicht oder zumindest im Wesentlichen nicht bezüglich der Tragstruktur 11 in horizontaler Richtung drehbar gelagert.

Zurückkommend auf die schematisch in FIG. 2 in einer Schnittansicht gezeigte exemplarische Ausführungsform der erfindungsgemäßen Vorrichtung 1 zur Mittenrückstellung ist anzumerken, dass bei dieser Vorrichtung 1 eine Käfigstruktur 12 zum Einsatz kommt, welche den Wälzkörpern 6 der Wälzkörperanordnung 5 zugeordnet ist, und welche dazu dient, die Wälzkörper 6 der Wälzkörperanordnung 5 zwangszuführen, wenn der erste Drehkörper 3 relativ zu dem zweiten Drehkörper 4 um die Vertikalachse V verdreht wird.

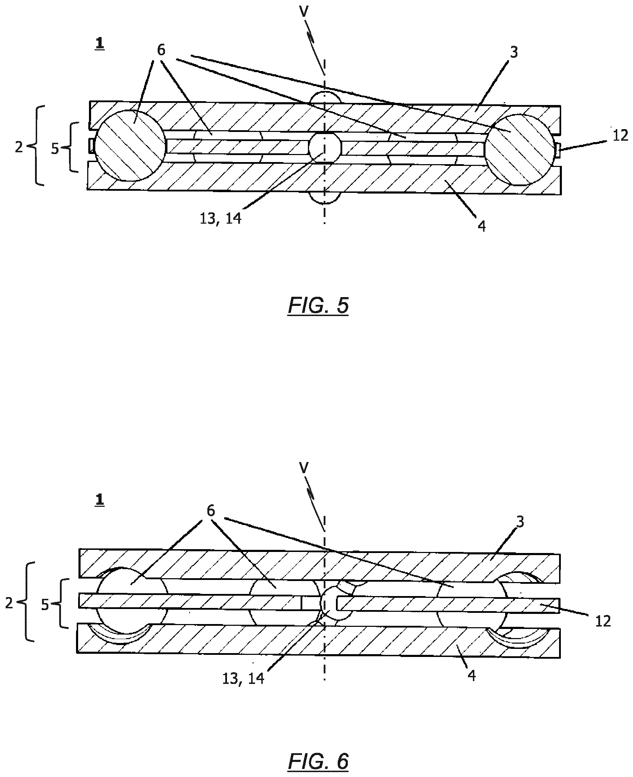

Die in FIG. 5 schematisch in einer Schnittansicht gezeigte weitere exemplarische Ausführungsform der erfindungsgemäßen Vorrichtung 1 zur horizontalen Mittenrückstellung entspricht in struktureller und funktioneller Hinsicht im Wesentlichen der zuvor unter Bezugnahme auf die Darstellungen in FIG. 2 bis FIG. 4 beschriebenen Ausführungsform, wobei jedoch bei der Ausführungsform gemäß FIG. 5 ferner eine Führungsstruktur 13 zum Einsatz kommt, die dazu dient, eine Bewegung der Käfigstruktur 12 relativ zu dem ersten und zweiten Drehkörper 3, 4 zu führen und/ oder zu begrenzen.

Durch die Führungsstruktur 13 soll die Käfigstruktur 12 mit den Wälzkörpern 6 gleichmäßig - also stets mit halber Winkelgeschwindigkeit - zwischen den Drehkörpern 3, 4 geführt werden. Dadurch soll gewährleistet werden, dass die Wälzkörper 6 gleichmäßig die Nuten/Laufbahnen 7 der beiden Drehkörper 3, 4 verlassen, bzw. wieder in sie hineinfallen (z.B. im Falle unterschiedlich starker Reibung/Schmierung).

Im Einzelnen weist - wie es eine Zusammenschau von FIG. 5 und FIG. 6 zeigt - bei dieser exemplarischen Ausführungsform die Führungsstruktur 13 mindestens eine Führungskörper 14 auf, welcher bezüglich der Vertikalachse V exzentrisch angeordnet ist und die beiden Drehkörper 3, 4 miteinander verbindet. Hierbei ist insbesondere vorgesehen, dass der mindestens eine Führungskörper 14 relativ zu dem ersten Drehkörper 3 und dem zweiten Drehkörper 4 rotatorisch bewegbar gelagert ist.

Im Einzelnen ist der Führungskörper 14 konzentrisch mit der Achse der Führungsstruktur 13 angeordnet. Diese Achse steht in der Nulllage parallel zur Vertikalachse V, ist aber exzentrisch zu dieser positioniert.

Eine weitere exemplarische Ausführungsvariante der erfindungsgemäßen Vorrichtung 1 zur Mittenrückstellung ist in einer schematischen Schnittansicht in FIG. 7 gezeigt. Diese Vorrichtung 1 befindet sich hierbei in ihrem Grundzustand. FIG. 8 zeigt schematisch die exemplarische Ausführungsform gemäß FIG. 7 in einer Explosionsdarstellung.

Wie dargestellt, weist die exemplarische Ausführungsform gemäß FIG. 7 und FIG. 8 eine Axiallagereinrichtung 2 mit einem ersten Lagerteil 3 in Gestalt einer Lagerscheibe sowie mit einem weiteren, zweiten Lagerteil 3 (ebenfalls in Gestalt einer Lagerscheibe) auf, wobei die beiden Drehkörper 3, 4 in vertikaler Richtung voneinander beabstandet sind. Zwischen den Lagerteilen 3, 4 sind mehrere Wälzkörper 6 (hier: kugelförmige Wälzkörper 6) angeordnet, wie es bei einer klassischen, herkömmlichen Axiallageranordnung üblich ist. Den Wälzkörpern 6 kann eine Käfigstruktur 12 zugeordnet sein, damit deren Abstand relativ zueinander definiert und eine Zwangsführung der Wälzkörper 6 erfolgt, wenn die beiden Drehkörper 3, 4 relativ zueinander und um eine Vertikalachse V der Axiallagereinrichtung 2 verdreht werden.

Des Weiteren sind vorzugsweise in beiden Lagerteilen 3, 4 jeweils eine Laufbahn 7 vorgesehen, die ebenfalls zur Führung der Wälzkörper 6 bei einem Verdrehen der beiden Drehkörper 3, 4 relativ zueinander dienen. Die Laufbahnen 7 sind - wie es zuvor unter Bezugnahme auf die Darstellungen in FIG. 3 und FIG. 4 beschrieben wurde - mit unterschiedlichen Bereichen 8, 9 versehen, die sich durch deren Laufbahntiefe unterscheiden.

In einem Grundzustand der Axiallagereinrichtung 2 liegen vorzugsweise alle Wälzkörper 6 jeweils in einem (ersten) Bereich 8 der Laufbahn 7 vor, in welchem die Laufbahntiefe am größten ist.

Wenn somit der zweite Drehkörper 4 relativ zu dem ersten Drehkörper 3 um die Vertikalachse V gedreht wird, müssen die Wälzkörper 6 aus dem ersten Laufbahnbereich 8 zu einem daran angrenzenden zweiten Laufbahnbereich 9 übergehen, der eine geringere Laufbahntiefe als der erste Laufbahnbereich 8 aufweist, so dass ein vertikaler Abstand zwischen den Drehkörpern 3, 4 zwangsläufig zunimmt.

Andererseits ist bei der in FIG. 7 und FIG. 8 schematisch dargestellten exemplarischen Ausführungsform der erfindungsgemäßen Vorrichtung 1 zur horizontalen Mittenrückstellung vorgesehen, dass der zweite Drehkörper 4 bezüglich einer Tragstruktur 11 (hier: Axiallagergehäuse) drehfest oder zumindest im Wesentlichen drehfest gelagert ist. Diese Lagerung kann - wie es beispielsweise der Darstellung in FIG. 8 entnommen werden kann - beispielsweise durch eine entsprechende Rastverbindung realisiert werden, die zwischen dem zweiten Drehkörper 4 und der Tragstruktur 11 ausgebildet wird.

Andererseits ist der zweite Drehkörper 4 so in der Tragstruktur 11 gelagert, dass sich der zweite Drehkörper 4 - zumindest über einen gewissen Bereich - in vertikaler Richtung relativ zu der Tragstruktur 11 (hier: Axiallagergehäuse) bewegen kann.

Im Unterschied hierzu ist der erste Drehkörper 3 bezüglich der Tragstruktur 11 so gelagert, dass eine Vertikalbewegung relativ zu der Tragstruktur 11 nicht möglich ist. Zu diesem Zweck kommt bei der in FIG. 7 und FIG. 8 schematisch dargestellten exemplarischen Ausführungsform ein entsprechender Deckel 15 und vorzugsweise auch eine zwischen dem Deckel 15 und dem ersten Drehkörper 3 angeordnete Gleitscheibe 16 zum Einsatz.

Jedoch ist der erste Drehkörper 3 nicht drehfest bezüglich der Tragstruktur 11 gelagert, sondern kann in der horizontalen Ebene entsprechend verdreht werden. Zumindest indirekt ist mit dem ersten Drehkörper 3 ein (in FIG. 7 und FIG. 8 nicht dargestellter) Kupplungsschaft verbunden.

Der Darstellung in FIG. 7 und FIG. 8 ist ferner zu entnehmen, dass eine druckbeaufschlagte oder durckbeaufschlagbare Stempelanordnung 10 vorgesehen ist, die dem zweiten Drehkörper 4 zugeordnet ist und sich gegenüber der Tragstruktur 11 abstützt. Über diese druckbeaufschlagte oder druckbeaufschlagbare Stempelanordnung 10 kann eine in Richtung des ersten Drehkörpers 3 wirkende Normalkraft in den zweiten Drehkörper 4 eingeleitet werden.

Zwar ist in FIG. 7 und FIG. 8 angedeutet dass die druckbeaufschlagte Stempelanordnung 10 entsprechende Federn 17, wie beispielsweise Tellerfedern aufweist; allerdings ist diese Realisierung nicht als einschränkend anzusehen. Vielmehr ist es von Vorteil, wenn die Stempelanordnung 10 derart ausgebildet ist, dass ein Betrag der über die Stempelanordnung 10 in den zweiten Drehkörper 4 eingeleiteten Normalkraft einstellbar ist, um somit bedarfsweise auch eine Mittenrückstellung zu deaktivieren. Insofern bietet es sich in diesem Zusammenhang auch an, eine hydraulisch oder pneumatisch betätigte Stempelanordnung 10 vorzusehen.

Schließlich kommt bei der in FIG. 7 und FIG. 8 schematisch dargestellten Ausführungsform noch eine Führungsstruktur 13 zum Einsatz, wie sie bereits zuvor unter Bezugnahme auf die Darstellungen in den FIG. 5 und 6 beschrieben wurde.

Kurz zusammengefasst stellt sich die Funktion der erfindungsgemäßen Vorrichtung 1 zur horizontalen Mittenstellung wie folgt dar:
- der erste oder zweite Drehkörper 3, 4 (beispielsweise der untere Drehkörper 4) der beiden Drehkörper wird durch eine Kraft beaufschlagt, wobei dieser Drehkörper derart drehfest in einer Tragstruktur 11 gelagert ist, dass es sich in vertikaler Richtung auf- und abbewegen kann, während der andere der beiden Drehkörper stets gegen einen Deckel 15 bzw. gegen eine Gleitscheibe 16 gedrückt wird, so dass sich dieser Drehkörper nicht auf- und abbewegen, jedoch drehen kann;
- ein Kupplungsschaft ist drehfest mit dem oberen Drehkörper 3 verbunden; und
- vorzugsweise beide Drehkörper 3, 4 sind mit Laufbahnen 7 versehen, in denen entsprechende Taschen (erste Bereiche 8) vorgesehen sind, wobei die Geometrie der Laufbahnen 7 zusammen mit dem Abrollen der Wälzkörper 6 auf den Laufbahnen 7 die wirkende Normalkraft in eine Umfangskraft umwandelt, die zum Generieren eines Rückstellmoments genutzt wird.

Die Laufbahnen 7 sind so ausgeführt, dass:
- die Wälzkörper 6 in der Mittelstellung jeweils in einer Wanne (erster Bereich 8), d.h. in einem Bereich mit größerer Laufbahntiefe, liegen;
- die Wälzkörper 6 bei kleineren Ausschlägen eine relativ große Steigung überwinden müssen und somit eine hohe Umfangskraft generieren;
- die Wälzkörper 6 sich ab einem bestimmten Ausschlag auf einem Plateau (zweiter Bereich 9) befinden und somit keine Umfangskraft und keinen Rückstellmoment generieren.

Vorzugsweise werden die Wälzkörper 6 durch eine Käfigstruktur 12 zwangsgeführt, um stets im selben Abstand zueinander zu bleiben.

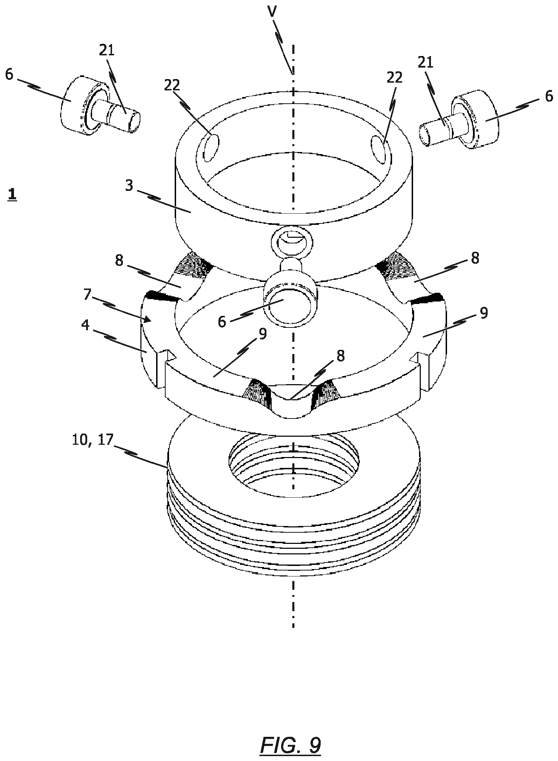

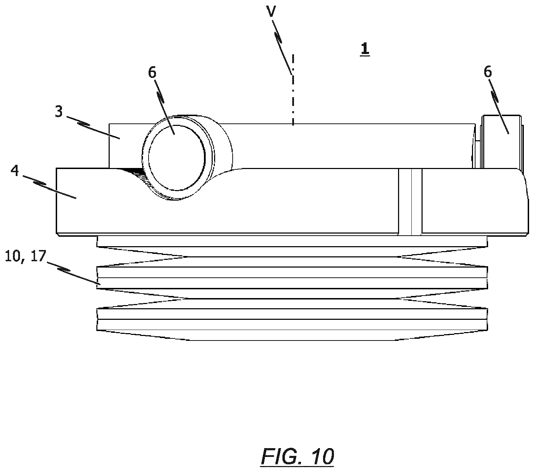

Nachfolgend wird unter Bezugnahme auf die Darstellungen in FIG. 9 und in FIG. 10 eine weitere Ausführungsform der erfindungsgemäßen Vorrichtung 1 zur horizontalen Mittenrückstellung eines (in FIG. 9 und in FIG. 10 nicht dargestellten) Kupplungsschaftes insbesondere einer Mittelpufferkupplung eines spurgeführten Fahrzeuges beschrieben.

Wie auch bei den Ausführungsformen gemäß den FIGS. 2 bis 8 ist bei der weiteren exemplarischen Ausführungsform gemäß den FIGS. 9 und 10 vorgesehen, dass die Vorrichtung 1 einen ersten Drehkörper 3 und einen relativ zu dem ersten Drehkörper 3 drehbaren zweiten Drehkörper 4 aufweist.

Im Unterschied zu den zuvor beschriebenen exemplarischen Ausführungsformen der vorliegenden Erfindung jedoch sind bei der Ausführungsform gemäß den FIGS. 9 und 10 die beiden Drehkörper 3, 4 nicht wirklich vertikal voneinander beabstandet angeordnet. Vielmehr sind bei der Ausführungsform gemäß den FIGS. 9 und 10 zumindest der zweite Drehkörper 4 zumindest bereichsweise kreiszylinderförmig ausgebildet. Die beiden Drehkörper 3, 4 sind dabei derart koaxial zueinander angeordnet, dass der erste Drehkörper 3 zumindest bereichsweise von dem zweiten Drehkörper 4 aufgenommen wird.

Anstelle einer kreiszylinderförmigen Ausbildung der Drehkörper 3, 4 ist es auch denkbar, diese Drehkörper zumindest bereichsweise ring- oder kranzförmig auszubilden, insbesondere kreisringförmig.

Wie es der Darstellung in FIG. 9 entnommen werden kann, kommt bei dieser Ausführungsform ferner ein Laufrollensystem mit mehreren Laufrollen 6 zum Einsatz. Die Laufrollen 6 dienen hierbei als entsprechende Wälzkörper. Besonders bevorzugt ist es dabei, wenn das Laufrollensystem genau drei Laufrollen aufweist, um eine entsprechende 3-Punkt-Lagerung zu gewährleisten, wodurch insbesondere ausgeschlossen wird, dass das System bestehend aus den beiden Drehkörpern 3, 4 kippelt und somit ungleichmäßig belastet wird.

Wie in FIG. 9 schematisch angedeutet, sind die vorzugsweise drei Laufrollen 6 insbesondere in einer äquidistanten Beziehung zueinander angeordnet.

Die Laufrollen 6 werden über den ersten Drehkörper 3 drehbar gelagert und stehen in radialer Richtung von dem ersten Drehkörper 3 ab.

In diesem Zusammenhang ist es denkbar, wenn jeder Laufrolle 6 eine entsprechende, insbesondere stiftförmige Laufrollenachse 21 vorgesehen ist, die in einer in dem ersten Drehkörper 3 vorgesehenen Aufnahme 22 drehbar gelagert wird.

Die Lagerung der Laufrollen 6 erfolgt insbesondere derart, dass sie in radialer Richtung von dem ersten Drehkörper 3 abstehen und im zusammengebauten Zustand der Vorrichtung 1 (vgl. FIG. 10) auf der oberen Stirnfläche des zweiten Drehkörpers 4 aufliegen, und zwar derart, dass die beiden Drehkörper 3, 4 über die Laufrollen 6 des Laufrollensystems zueinander um eine Vertikalachse V verdrehbar sind.

Auf diese Weise dient die (obere) Stirnfläche des zweiten Drehkörpers 4 als Laufbahn 7 für die Laufrollen 6 des Laufrollensystems.

Dabei ist insbesondere vorgesehen, dass die Laufbahn 7 und die Laufrollen 6 zumindest teilweise derart zusammenwirken, dass bei einer Drehung des ersten Drehkörpers 3 relativ zu dem zweiten Drehkörper 4 der erste Drehkörper 3 relativ zu dem zweiten Drehköper 4 entlang der Vertikalachse V bewegt wird.

Im Einzelnen ist bei der in den FIGS. 9 und 10 schematisch dargestellten Ausführungsform der erfindungsgemäßen Vorrichtung 1 insbesondere vorgesehen, dass die Laufbahn 7 und die Laufrollen 6 des Laufrollensystems zumindest teilweise derart zusammenwirken, dass sich der erste Drehkörper 3 relativ zu dem zweiten Drehkörper 4 entlang der Vertikalachse V zumindest teilweise aus dem zweiten Drehkörper 4 herausbewegt, wenn ausgehend von einem beispielsweise in FIG. 10 gezeigten Grundzustand der Vorrichtung 1, in welchem die beiden Drehkörper 3, 4 nicht zueinander verdreht sind, die Drehkörper 3, 4 zumindest um einen vorab festgelegten oder festlegbaren Winkelbetrag zueinander verdreht werden.

Um dies zu realisieren ist es denkbar, wenn die Laufbahn, d.h. die (obere) Stirnfläche des zweiten Drehkörpers 4, auf welche die Laufrollen 6 des Laufrollensystems aufliegen, erste Bereiche 8 mit zumindest bereichsweise einer ersten Laufbahntiefe und weitere, zweite Bereiche 9 mit zumindest bereichsweise einer zweiten Laufbahntiefe aufweist, wobei - wie beispielsweise in FIG. 9 ersichtlich - die erste Laufbahntiefe größer als die zweite Laufbahntiefe ist, und wobei in einem Übergangsbereich zwischen einem ersten Bereich 8 und einem zweiten Bereich 9 die Laufbahntiefe der Laufbahn 7 vorzugsweise stetig von der ersten Laufbahntiefe auf die zweite Laufbahntiefe übergeht.

Obwohl in den FIGS. 9 und 10 nicht dargestellt, ist es von Vorteil, wenn der Kupplungsschaft beispielsweise einer automatischen Mittelpufferkupplung eines spurgeführten Fahrzeuges zumindest im Wesentlichen drehfest mit dem ersten Drehkörper 3 verbunden ist, wobei der erste Drehkörper 3 bezüglich einer (in den FIGS. 9 und 10 nicht dargestellten) Tragstruktur zwar um die Vertikalachse V drehbar, jedoch nicht oder zumindest im Wesentlichen nicht bezüglich der Tragstruktur in vertikaler Richtung bewegbar gelagert ist.

Andererseits ist es von Vorteil, wenn der zweite Drehkörper 4 bezüglich der Tragstruktur zwar in vertikaler Richtung bewegbar, jedoch nicht oder zumindest im Wesentlichen nicht bezüglich der Tragstruktur in horizontaler Richtung drehbar gelagert ist.

Wie in den FIGS. 9 und 10 dargestellt, ist dem zweiten Drehkörper 4 eine sich gegenüber einer (nicht gezeigten) Tragstruktur abstützende, druckbeaufschlagte oder druckbeaufschlagbare Stempelanordnung 10 zugeordnet, über welche eine in Richtung des ersten Drehkörpers 3 wirkende Normalkraft in den zweiten Drehkörper 4 eingeleitet wird.

Wie auch bei den zuvor unter Bezugnahme auf die Darstellungen in den FIGS. 2 bis 8 beschriebenen Ausführungsformen der erfindungsgemäßen Vorrichtung 1 wird bei der weiteren Ausführungsform gemäß den Darstellungen in den FIGS. 9 und 10 das grundsätzliche Prinzip einer "Berg- und Tal-Bahn" beibehalten, wobei weiterhin das zur Mittenrückstellung nötige Rückstellmoment durch eine Steigung in der Bahn in Kombination mit einer auf die Bahn wirkende Normalkraft generiert wird.

Jedoch kommen bei der in den FIGS. 9 und 10 schematisch dargestellten Ausführungsform als Wälzkörper keine Kugeln zum Einsatz, sondern Rollen, insbesondere Laufrollen, was die folgenden zusätzlichen Vorteile mit sich bringt:
- aufgrund ihrer zylindrischen Form und der daraus resultierenden linienförmigen Berührung zwischen den Laufrollen 6 und der Laufbahn 7 ist die Flächenpressung bei dieser Paarung grundsätzlich geringer, was ermöglicht, dass - im Vergleich zu den Ausführungsformen gemäß den FIGS. 2 bis 8 - weniger Wälzkörper (Laufrollen) bei ähnlichem Durchmesser verwendet werden können;
- insbesondere ist es möglich, dass nur insgesamt drei Wälzkörper (Laufrollen) zum Einsatz kommen, so dass insbesondere ausgeschlossen ist, dass das System kippelt und somit ungleichmäßig belastet wird;
- die zylindrische Form der Laufrollen vereinfacht zusätzlich die Fertigung der Laufbahn; diese kann nun durch ein einfaches zylinderförmiges Fräswerkzeug oder ähnliches erstellt werden;
- die Laufrollen weisen eine bolzenförmige Befestigungsmöglichkeit auf; sie können somit fest mit dem ersten Drehkörper 3 verbunden werden und müssen folglich nicht durch einen Käfig oder eine ähnliche Struktur aufwendig geführt werden; und
- durch die Laufrollen und ihre Befestigung (Lagerung an dem ersten Drehkörper 3) können große Kräfte geleitet werden, was eine weitere, zweite Laufbahn - wie es bei den Ausführungsformen gemäß den FIGS. 2 bis 8 der Fall war - überflüssig macht, so dass der erste Drehkörper, der das Bauteil darstellt, welches die Laufrollen aufnimmt, somit das generierte Rückstellmoment an den Kupplungsschaft übertragen kann.

Obgleich in den FIGS. 9 und 10 nicht dargestellt, bietet es sich ferner an, die Vorrichtung 1 in einem als Tragstruktur dienenden Gehäuse anzuordnen, welches die Gegenkraft (Reaktio) der druckbeaufschlagten oder druckbeaufschlagbaren Stempelanordnung 10 aufnimmt.

Vorzugsweise liegt der erste Drehkörper 3 auf der Drehachse des rückzustellenden Kupplungsschaftes. Die Drehbewegung des Kupplungsschaftes wird dabei auf den ersten Drehkörper 3 übertragen. In der Höhe ist der erste Drehkörper 3 fixiert.

Durch die Drehbewegung bewirken die an dem ersten Drehkörper 3 befestigten Laufrollen 6 eine Auf- und Abbewegung des zweiten Drehkörpers 4. Dieser ist an dem als Tragstruktur dienenden Gehäuse gegen Verdrehen gesichert. Auf die Laufbahn wird - wie bei den zuvor beschriebenen Ausführungsformen - durch die druckbeaufschlagte oder druckbeaufschlagbare Stempelanordnung 10 eine Kraft ausgeübt.

Die Höhenfixierung des ersten Drehkörpers 3 erfolgt vorzugsweise, indem der erste Drehkörper 3 durch Gleitelemente und eine entsprechende Gehäusekonstruktion (z. B. durch einen Deckel) direkt im Gehäuse auf der entsprechenden Höhe gehalten wird. Dies hat den Vorteil, dass die gesamte Vorrichtung 1 zur horizontalen Mittenrückstellung als eine alleinstehende Komponente angebracht bzw. entfernt werden kann.

Die Erfindung ist nicht auf die exemplarischen Ausführungsformen beschränkt, sondern ergibt sich aus einer Zusammenschau sämtlicher hierin offenbarter Aspekte.

Insbesondere ist es beispielsweise auch denkbar, dass die Laufbahnen der Lagerteile weitere Funktionen bieten, wie zum Beispiel Zwischenrastungen oder Anschläge.

## Patentansprüche

1. Mittelpufferkupplung für ein spurgeführtes Fahrzeug, insbesondere Schienenfahrzeug, mit einem Kupplungsschaft und einer Vorrichtung (1) zur horizontalen Mittenrückstellung des Kupplungsschafts der Mittelpufferkupplung, wobei die Vorrichtung (1) einen ersten Drehkörper (3) und einen relativ zu dem ersten Drehkörper (3) drehbaren zweiten Drehkörper (4) aufweist, wobei die Vorrichtung (1) ausgebildet ist, die zur Generierung eines an dem Kupplungsschaft angreifenden Rückstellmoments benötigte Kraft durch Verdrehen der beiden Drehkörper (3, 4) relativ zueinander zu erzeugen, **dadurch gekennzeichnet, daß** die Mittelpufferkupplung eine Axiallagereinrichtung umfasst und der erste und zweite Drehkörper (3, 4) Komponenten der einer Axiallagereinrichtung (2) sind, und wobei die Axiallagereinrichtung (2) ausgebildet ist, zumindest bedarfsweise ein auf den Kupplungsschaft wirkendes Drehmoment zu generieren.

2. Mittelpufferkupplung nach Anspruch 1,
wobei die Axiallagereinrichtung (2) ausgebildet ist, den Kupplungsschaft relativ zu einer Tragstruktur (11) horizontal verschwenkbar zu lagern.

3. Mittelpufferkupplung nach Anspruch 1 oder 2,
wobei die Vorrichtung (1) ausgebildet ist, zumindest dann ein auf den Kupplungsschaft wirkendes Drehmoment zu generieren, wenn der Kupplungsschaft bezüglich einer festgelegten oder festlegbaren Mittenstellung horizontal ausgelenkt ist.

4. Mittelpufferkupplung nach einem der Ansprüche 1 bis 3,
wobei der erste und zweite Drehkörper (3, 4) jeweils zumindest bereichsweise kreiszylinderförmig ausgebildet und derart koaxial zueinander angeordnet sind, dass der erste Drehkörper (3) zumindest bereichsweise von dem zweiten Drehkörper (4) aufgenommen wird, wobei die Vorrichtung (1) ferner ein Laufrollensystem mit mindestens zwei Laufrollen (6) und vorzugsweise genau drei Laufrollen (6) aufweist, welche über den ersten Drehkörper (3) drehbar gelagert sind und derart in radialer Richtung von dem ersten Drehkörper (3) abstehen und auf einer Stirnfläche des zweiten Drehkörpers (4) aufliegen, dass die Drehkörper (3, 4) über die Laufrollen (6) des Laufrollensystems zueinander um eine Vertikalachse (V) verdrehbar sind.

5. Mittelpufferkupplung nach Anspruch 4,
wobei die Stirnfläche des zweiten Drehkörpers (4) als Laufbahn (7) für die Laufrollen (6) des Laufrollensystems dient, wobei die Laufbahn (7) und die Laufrollen (6) zumindest teilweise derart zusammenwirken, dass bei einer Drehung des ersten Drehkörpers (3) relativ zu dem zweiten Drehkörper (4) der erste Drehkörper (3) relativ zu dem zweiten Drehkörper (4) entlang der Vertikalachse (V) bewegt wird.

6. Mittelpufferkupplung nach Anspruch 5,
wobei die Laufbahn (7) und die Laufrollen (6) zumindest teilweise derart zusammenwirken, dass sich der erste Drehkörper (3) relativ zu dem zweiten Drehkörper (4) entlang der Vertikalachse (V) zumindest teilweise aus dem zweiten Drehkörper (4) herausbewegt, wenn ausgehend von einem Grundzustand der Vorrichtung (1), in welchem die Drehkörper (3, 4) nicht zueinander verdreht sind, die Drehkörper (3, 4) zumindest um einen vorab festgelegten oder festlegbaren Winkelbetrag zueinander verdreht werden.

7. Mittelpufferkupplung nach Anspruch 5 oder 6,
wobei die Laufbahn erste Bereiche (8) mit zumindest bereichsweise einer ersten Laufbahntiefe und weitere, zweite Bereiche (9) mit zumindest bereichsweise einer zweiten Laufbahntiefe aufweist, wobei die erste Laufbahntiefe größer als die zweite Laufbahntiefe ist, und wobei in einem Übergangsbereich zwischen einem ersten Bereich (8) und einem zweiten Bereich (9) die Laufbahntiefe der Laufbahn (7) vorzugsweise stetig von der ersten Laufbahntiefe auf die zweite Laufbahntiefe übergeht,
wobei in dem Grundzustand der Vorrichtung (1) die Laufrollen zumindest bereichsweise vorzugsweise jeweils in einem ersten Bereich der Laufbahn angeordnet sind.

8. Mittelpufferkupplung nach einem der Ansprüche 1 bis 3,
wobei der zweite Drehkörper (4) von dem ersten Drehkörper (3) beabstandet angeordnet ist,
wobei der erste Drehkörper (3) vorzugsweise als erstes Lagerteil, insbesondere in Gestalt einer Lagerscheibe, ausgebildet ist,
wobei der zweite Drehkörper (4) vorzugsweise als zweites Lagerteil, insbesondere in Gestalt einer Lagerscheibe, ausgebildet ist, und wobei die Vorrichtung (1) ferner folgendes aufweist:
- eine Wälzkörperanordnung (5) mit mindestens einem Wälzkörper (6) und vorzugsweise einer Vielzahl von Wälzkörpern (6), welcher bzw. welche zumindest bereichsweise zwischen dem ersten Drehkörper (3) und dem zweiten Drehkörper (4) derart angeordnet ist, dass über den mindestens einen Wälzkörper (6) die Drehkörper (3, 4) zueinander um eine Vertikalachse (V) verdrehbar sind.

9. Mittelpufferkupplung nach Anspruch 8,
wobei in dem ersten Drehkörper (3) und/oder in dem zweiten Drehkörper (4) eine Laufbahn (7), insbesondere in Gestalt einer Nut, vorgesehen ist zum zumindest bereichsweisen Führen des mindestens einen Wälzkörpers (6) bei einer Drehung des ersten Drehkörpers (3) um die Vertikalachse (V) relativ zu dem zweiten Drehkörper (4),
wobei die Laufbahn (7) und der mindestens eine Wälzkörper (6) zumindest teilweise vorzugsweise derart zusammenwirken, dass bei einer Drehung des ersten Drehkörpers (3) relativ zu dem zweiten Drehkörper (4) ein vertikaler Abstand zwischen den Drehkörpern variiert; und/oder
wobei die Laufbahn (7) und der mindestens eine Wälzkörper (6) zumindest teilweise derart zusammenwirken, dass ein vertikaler Abstand zwischen den Drehkörpern zunimmt, wenn ausgehend von einem Grundzustand der Vorrichtung (1), in welchem die Drehkörper nicht zueinander verdreht sind, die Drehkörper zumindest um einen vorab festgelegten oder festlegbaren Winkelbetrag zueinander verdreht werden; und/oder
wobei die Laufbahn (7) mindestens einen ersten Bereich (8) mit zumindest bereichsweise einer ersten Laufbahntiefe und mindestens einen weiteren, zweiten Bereich (9) mit zumindest bereichsweise einer zweiten Laufbahntiefe aufweist, wobei die erste Laufbahntiefe größer als die zweite Laufbahntiefe ist, und wobei in einem Übergangsbereich zwischen dem mindestens einen ersten Bereich (8) und dem mindestens einen zweiten Bereich (9) die Laufbahntiefe der Laufbahn (7) vorzugsweise stetig von der ersten Laufbahntiefe auf die zweite Laufbahntiefe übergeht,
wobei in dem Grundzustand der Vorrichtung (1) der mindestens eine Wälzkörper (6) zumindest bereichsweise vorzugsweise in dem mindestens einen ersten Bereich (8) der Laufbahn (7) angeordnet ist.

10. Mittelpufferkupplung nach Anspruch 8 oder 9,
wobei die Wälzkörperanordnung (5) mindestens zwei Wälzkörper (6) und eine den mindestens zwei Wälzkörpern (6) zugeordnete Käfigstruktur (12) aufweist zum Zwangsführen der mindestens zwei Wälzkörper (6).

11. Mittelpufferkupplung nach Anspruch 10,
wobei ferner eine Führungsstruktur (13) vorgesehen ist zum Führen und/ oder Begrenzen einer Bewegung der Käfigstruktur (12) relativ zu dem ersten und zweiten Drehkörper (3, 4).

12. Mittelpufferkupplung nach Anspruch 11,
wobei die Führungsstruktur (13) mindestens einen Führungskörper (14) aufweist, welcher bezüglich der Vertikalachse (V) exzentrisch angeordnet ist und die Drehkörper (3, 4) miteinander verbindet,
wobei vorzugsweise der Führungskörper (14) relativ zu dem ersten Drehkörper (3) und/ oder relativ zu dem zweiten Drehkörper (4) rotatorisch bewegbar gelagert ist.

13. Mittelpufferkupplung nach einem der Ansprüche 4 bis 12,
wobei der Kupplungsschaft zumindest im Wesentlichen drehfest mit dem ersten Drehkörper (3) verbunden ist, und wobei der erste Drehkörper (3) bezüglich einer Tragstruktur (11) zwar um die Vertikalachse (V) drehbar, jedoch nicht oder zumindest im Wesentlichen nicht bezüglich der Tragstruktur (11) in vertikaler Richtung bewegbar gelagert ist.

14. Mittelpufferkupplung nach Anspruch 13,
wobei der zweite Drehkörper (4) bezüglich der Tragstruktur (11) zwar in vertikaler Richtung bewegbar, jedoch nicht oder zumindest im Wesentlichen nicht bezüglich der Tragstruktur (11) in horizontaler Richtung drehbar gelagert ist.

15. Mittelpufferkupplung nach Anspruch 13 oder 14,
wobei dem zweiten Drehkörper (4) eine sich gegenüber der Tragstruktur (11) abstützende, druckbeaufschlagte oder druckbeaufschlagbare Stempelanordnung (10) zugeordnet ist, über welche eine in Richtung des ersten Drehkörpers (3) wirkende Normalkraft in den zweiten Drehkörper (4) eingeleitet wird, wobei die Stempelanordnung (10) vorzugsweise derart ausgebildet ist, dass ein Betrag der über die Stempelanordnung (10) in den zweiten Drehkörper (4) eingeleiteten Normalkraft einstellbar ist.

## Claims

1. A central buffer coupling for a track-guided vehicle, in particular a rail vehicle, with a coupling shaft and a device (1) for horizontal recentring of the coupling shaft of the central buffer coupling, the device (1) having a first rotational element (3) and a second rotational element (4) rotatable relative to the first rotational element (3), the device (1) being configured to produce the force required to generate the restoring torque acting on the coupling shaft by rotation of the two rotational elements (3, 4) relative to one another, **characterised in that** the central buffer coupling comprises an axial bearing means and the first and second rotational elements (3, 4) are components of the axial bearing means (2), and wherein the axial bearing means (2) is configured to generate, at least when required, a torque acting on the coupling shaft.

2. A central buffer coupling according to Claim 1,
wherein the axial bearing means (2) is configured to mount the coupling shaft horizontally pivotably relative to a support structure (11).

3. A central buffer coupling according to Claim 1 or 2,
wherein the device (1) is configured to generate a torque acting on the coupling shaft at least when the coupling shaft is horizontally deflected with respect to a specified or specifiable centre position.

4. A central buffer coupling according to one of Claims 1 to 3,
wherein the first and second rotational elements (3, 4) are each, at least in places, circular cylindrical and are arranged coaxially relative to one another in such a way that the first rotational element (3) is received at least in places by the second rotational element (4), wherein the device (1) furthermore has a roller system with at least two rollers (6) and preferably precisely three rollers (6) which are rotatably mounted via the first rotational element (3) and protrude in the radial direction from the first rotational element (3) and rest on an end face of the second rotational element (4) in such a way that, by way of the rollers (6) of the roller system, the rotational elements (3, 4) are rotatable relative to one another about a vertical axis (V).

5. A central buffer coupling according to Claim 4,
wherein the end face of the second rotational element (4) serves as a track (7) for the rollers (6) of the roller system, wherein the track (7) and the rollers (6) at least in part interact in such a way that, on rotation of the first rotational element (3) relative to the second rotational element (4), the first rotational element (3) is moved relative to the second rotational element (4) along the vertical axis (V).

6. A central buffer coupling according to Claim 5,
wherein the track (7) and the rollers (6) at least in part interact in such a way that the first rotational element (3) moves at least in part out of the second rotational element (4) along the vertical axis (V) relative to the second rotational element (4) when, starting from a base state of the device (1), in which the rotational elements (3, 4) are not rotated relative to one another, the rotational elements (3, 4) are rotated relative to one another by at least a previously specified or specifiable angular amount.

7. A central buffer coupling according to Claim 5 or 6,
wherein the track has first regions (8) with a first track depth at least in places and further, second regions (9) with a second track depth at least in places, wherein the first track depth is greater than the second track depth, and wherein, in a transitional region between a first region (8) and a second region (9), the track depth of the track (7) transitions preferably continuously from the first track depth to the second track depth,
wherein, in the base state of the device (1), the rollers are preferably each arranged at least in places in a first region of the track.

8. A central buffer coupling according to one of Claims 1 to 3,
wherein the second rotational element (4) is spaced from the first rotational element (3),
wherein the first rotational element (3) is preferably configured as the first bearing part, in particular in the form of a bearing race,
wherein the second rotational element (4) is preferably configured as the second bearing part, in particular in the form of a bearing race, and wherein the device (1) furthermore has the following:
- a rolling element arrangement (5) with at least one rolling element (6) and preferably a plurality of rolling elements (6) which is/are arranged at least in places between the first rotational element (3) and the second rotational element (4) in such a way that, by way of the at least one rolling element (6), the rotational elements (3, 4) are rotatable relative to one another about a vertical axis (V).

9. A central buffer coupling according to Claim 8,
wherein a track (7), in particular in the form of a groove, is provided in the first rotational element (3) and/or in the second rotational element (4) for at least in places guiding the at least one rolling element (6) on rotation of the first rotational member (3) relative to the second rotational element (4) about the vertical axis (V), wherein the track (7) and the at least one rolling element (6) preferably interact at least in places in such a way that, on rotation of the first rotational member (3) relative to the second rotational element (4), a vertical distance between the rotational elements varies; and/or
wherein the track (7) and the at least one rolling element (6) interact at least in places in such a way that a vertical distance between the rotational elements increases when, starting from a base state of the device (1), in which the rotational elements are not rotated relative to one another, the rotational elements are rotated relative to one another at least by a previously specified or specifiable angular amount; and/or
wherein the track (7) has at least one first region (8) with a first track depth at least in places and at least one further, second region (9) with a second track depth at least in places, wherein the first track depth is greater than the second track depth, and wherein, in a transitional region between the at least one first region (8) and the at least one second region (9), the track depth of the track (7) transitions preferably continuously from the first track depth to the second track depth,
wherein, in the base state of the device (1), the at least one rolling element (6) is preferably arranged at least in places in the at least one first region (8) of the track (7).

10. A central buffer coupling according to Claim 8 or 9,
wherein the rolling element arrangement (5) has at least two rolling elements (6) and a cage structure (12) associated with the at least two rolling elements (6) for positively guiding the at least two rolling elements (6).

11. A central buffer coupling according to Claim 10,
wherein furthermore a guide structure (13) is provided for guiding and/or limiting a movement of the cage structure (12) relative to the first and second rotational elements (3, 4).

12. A central buffer coupling according to Claim 11,
wherein the guide structure (13) has at least one guide element (14) which is arranged eccentrically with respect to the vertical axis (V) and connects the rotational elements (3, 4) to one another,
wherein the guide element (14) is preferably rotationally movably mounted relative to the first rotational element (3) and/ or relative to the second rotational element (4).

13. A central buffer coupling according to one of Claims 4 to 12,
wherein the coupling shaft is at least substantially nonrotatably connected to the first rotational element (3), and wherein, while the first rotational element (3) is rotatable about the vertical axis (V) with respect to a support structure (11), it is, however, not or at least substantially not mounted movably in the vertical direction with respect to the support structure (11).

14. A central buffer coupling according to Claim 13,
wherein, while the second rotational element (4) is movable in the vertical direction with respect to the support structure (11), it is, however, not or at least substantially not mounted rotatably in the horizontal direction with respect to the support structure (11).

15. A central buffer coupling according to Claim 13 or 14,
wherein the second rotational element (4) is associated with a pressurised or pressurisable plunger arrangement (10) supported against the support structure (11), via which plunger arrangement (10) a normal force acting in the direction of the first rotational element (3) is introduced into the second rotational element (4), wherein the plunger arrangement (10) is preferably configured in such a way that a magnitude of the normal force introduced via the plunger arrangement (10) into the second rotational element (4) is adjustable.

## Revendications

1. Attelage à tampon central pour un véhicule guidé, en particulier un véhicule ferroviaire, présentant un axe d'attelage et un dispositif (1) destiné au recentrage horizontal de l'axe d'attelage de l'attelage à tampon central, le dispositif (1) présentant un premier corps rotatif (3) et un deuxième corps rotatif (4) pouvant tourner par rapport au premier corps rotatif (3), le dispositif (1) étant réalisé pour produire la force nécessaire à la génération d'un couple de rappel agissant sur l'axe d'attelage par rotation des deux corps rotatifs (3, 4) l'un par rapport à l'autre, **caractérisé en ce que** l'attelage à tampon central comprend un dispositif de palier axial et le premier et le deuxième corps rotatif (3, 4) sont des composants du dispositif de palier axial (2) et le dispositif de palier axial (2) étant réalisé pour générer au moins en cas de besoin un couple de rotation agissant sur l'axe d'attelage.

2. Attelage à tampon central selon la revendication 1,
le dispositif de palier axial (2) étant réalisé pour supporter l'axe d'attelage de manière à ce qu'il puisse pivoter horizontalement par rapport à une structure support (11).

3. Attelage à tampon central selon la revendication 1 ou 2,
le dispositif (1) étant réalisé pour générer un couple de rotation agissant sur l'axe d'attelage au moins lorsque l'axe d'attelage est dévié horizontalement par rapport à une position centrale fixée ou pouvant être fixée.

4. Attelage à tampon central selon l'une des revendications 1 à 3,
le premier et le deuxième corps rotatif (3, 4) étant à chaque fois réalisés au moins par endroits sous forme de cylindre circulaire et étant agencés coaxialement l'un par rapport à l'autre de telle sorte que le premier corps rotatif (3) est reçu au moins par endroits par le deuxième corps rotatif (4), le dispositif (1) présentant en outre un système à galets de roulement pourvu d'au moins deux galets de roulement (6) et de préférence d'exactement trois galets de roulement (6), qui sont logés de manière à pouvoir tourner par l'intermédiaire du premier corps rotatif (3) et qui dépassent du premier corps rotatif (3) dans la direction radiale et qui reposent sur une face frontale du deuxième corps rotatif (4) de telle sorte que les corps rotatifs (3, 4) peuvent être tournés l'un par rapport à l'autre autour d'un axe vertical (V) par l'intermédiaire des galets de roulement (6) du système à galets de roulement.

5. Attelage à tampon central selon la revendication 4,
la face frontale du deuxième corps rotatif (4) servant de chemin de roulement (7) pour les galets de roulement (6) du système à galets de roulement, le chemin de roulement (7) et les galets de roulement (6) coopérant au moins partiellement de telle sorte que, lors d'une rotation du premier corps rotatif (3) par rapport au deuxième corps rotatif (4), le premier corps rotatif (3) est déplacé par rapport au deuxième corps rotatif (4) le long de l'axe vertical (V).

6. Attelage à tampon central selon la revendication 5,
le chemin de roulement (7) et les galets de roulement (6) coopérant au moins partiellement de telle sorte que le premier corps rotatif (3) se déplace par rapport au deuxième corps rotatif (4) le long de l'axe vertical (V) au moins partiellement hors du deuxième corps rotatif (4) lorsque, à partir d'un état de base du dispositif (1) dans lequel les corps rotatifs (3, 4) ne sont pas tournés l'un par rapport à l'autre, les corps rotatifs (3, 4) sont tournés l'un par rapport à l'autre au moins d'une valeur angulaire fixée ou pouvant être fixée au préalable.

7. Attelage à tampon central selon la revendication 5 ou 6,
le chemin de roulement présentant des premières zones (8) présentant au moins par endroits une première profondeur de chemin de roulement et d'autres, secondes, zones (9) présentant au moins par endroits une seconde profondeur de chemin de roulement, la première profondeur de chemin de roulement étant supérieure à la seconde profondeur de chemin de roulement et, dans une zone de transition entre une première zone (8) et une seconde zone (9), la profondeur de chemin de roulement du chemin de roulement (7) passant de préférence en continu à partir de la première profondeur de chemin de roulement à la seconde profondeur de chemin de roulement,
où, dans l'état de base du dispositif (1), les galets de roulement sont disposés au moins par endroits, de préférence à chaque fois dans une première zone du chemin de roulement.

8. Attelage à tampon central selon l'une des revendications 1 à 3,
le deuxième corps rotatif (4) étant agencé à une certaine distance du premier corps rotatif (3),
le premier corps rotatif (3) étant de préférence réalisé comme une première pièce de palier, en particulier sous la forme d'un disque de palier,
le deuxième corps rotatif (4) étant de préférence réalisé comme une deuxième pièce de palier, en particulier sous la forme d'un disque de palier, et le dispositif (1) présentant en outre ce qui suit :
- un agencement de corps de roulement (5) présentant au moins un corps de roulement (6) et de préférence une pluralité de corps de roulement (6), qui est/sont disposé(s) au moins par endroits entre le premier corps rotatif (3) et le deuxième corps rotatif (4) de telle sorte que les corps rotatifs (3, 4) peuvent être tournés l'un par rapport à l'autre autour d'un axe vertical (V) par l'intermédiaire dudit au moins un corps de roulement (6).

9. Attelage à tampon central selon la revendication 8,
un chemin de roulement (7), en particulier sous la forme d'une rainure, étant prévu dans le premier corps rotatif (3) et/ou dans le deuxième corps rotatif (4) en vue de guider au moins par endroits ledit au moins un corps de roulement (6) lors d'une rotation du premier corps rotatif (3) autour de l'axe vertical (V) par rapport au deuxième corps rotatif (4),
le chemin de roulement (7) et ledit au moins un corps de roulement (6) coopérant de préférence au moins partiellement de telle sorte que, lors d'une rotation du premier corps rotatif (3) par rapport au deuxième corps rotatif (4), une distance verticale entre les corps rotatifs varie ; et/ou
le chemin de roulement (7) et ledit au moins un corps de roulement (6) coopérant de préférence au moins partiellement de telle sorte qu'une distance verticale entre les corps rotatifs augmente lorsque, partant d'un état de base du dispositif (1), dans lequel les corps rotatifs ne sont pas tournés l'un par rapport à l'autre, les corps rotatif sont tournés l'un par rapport à l'autre au moins d'une valeur angulaire fixée ou pouvant être fixée au préalable ; et/ou
le chemin de roulement (7) présentant au moins une première zone (8) présentant au moins par endroits une première profondeur de chemin de roulement et au moins une autre, seconde, zone (9) présentant au moins par endroits une seconde profondeur de chemin de roulement, la première profondeur de chemin de roulement étant supérieure à la seconde profondeur de chemin de roulement et, dans une zone de transition entre ladite au moins une première zone (8) et ladite au moins une seconde zone (9), la profondeur de chemin de roulement du chemin de roulement (7) passant de préférence en continu à partir de la première profondeur de chemin de roulement à la seconde profondeur de chemin de roulement,
où, dans l'état de base du dispositif (1), ledit au moins un corps de roulement (6) est disposé au moins par endroits, de préférence dans ladite au moins une première zone (8) du chemin de roulement (7).

10. Attelage à tampon central selon la revendication 8 ou 9,
l'agencement de corps de roulement (5) présentant au moins deux corps de roulement (6) et une structure de cage (12) associée auxdits au moins deux corps de roulement (6) en vue du guidage forcé desdits au moins deux corps de roulement (6).

11. Attelage à tampon central selon la revendication 10,
une structure de guidage (13) étant en outre prévue pour guider et/ou limiter un déplacement de la structure de cage (12) par rapport au premier et au deuxième corps rotatif (3, 4).

12. Attelage à tampon central selon la revendication 11,
la structure de guidage (13) présentant au moins un corps de guidage (14) qui est agencé de manière excentrique par rapport à l'axe vertical (V) et qui relie les corps rotatifs (3, 4) entre eux,
le corps de guidage (14) étant de préférence logé de manière mobile en rotation par rapport au premier corps rotatif (3) et/ ou par rapport au deuxième corps rotatif (4).

13. Attelage à tampon central selon l'une des revendications 4 à 12,
l'axe d'attelage étant relié au moins sensiblement de manière solidaire en rotation au premier corps rotatif (3) et le premier corps rotatif (3) étant certes logé de manière à pouvoir tourner autour de l'axe vertical (V) par rapport à une structure support (11), mais n'étant pas ou au moins sensiblement pas logé de manière mobile dans la direction verticale par rapport à la structure support (11).

14. Attelage à tampon central selon la revendication 13,
le deuxième corps rotatif (4) étant certes logé de manière mobile dans la direction verticale par rapport à la structure support (11), mais n'étant pas ou au moins sensiblement pas logé de manière à pouvoir tourner dans la direction horizontale par rapport à la structure support (11).

15. Attelage à tampon central selon la revendication 13 ou 14,
un agencement de piston (10) s'appuyant par rapport à la structure support (11), sollicité en pression ou pouvant être sollicité en pression, étant associé au deuxième corps rotatif (4), par l'intermédiaire duquel une force normale agissant en direction du premier corps rotatif (3) est introduite dans le deuxième corps rotatif (4), l'agencement de piston (10) étant de préférence réalisé de telle sorte qu'une contribution de la force normale introduite dans le deuxième corps rotatif (4) par l'intermédiaire de l'agencement de piston (10) est réglable.
